# EUROPEAN PATENT APPLICATION

(11) **EP 4 701 133 A1**
(43) Date of publication of application: **25.02.2026**
(21) Application number: 24806660.7
(22) Date of filing: 17.05.2024
(51) Int. Cl.: H04L 9/40

(54) **CLOUD-COMPUTING-BASED ACCESS MANAGEMENT METHOD AND APPARATUS, AND DEVICE**

(30) Priority: 18.05.2023 CN 202310564727; 25.09.2023 CN 202311247399
(71) Applicant: Huawei Cloud Computing Technologies Co., Ltd., Guiyang, Guizhou 550025 (CN)
(72) Inventor: LIN, Weibo, Guiyang, Guizhou 550025 (CN); LI, Jun, Guiyang, Guizhou 550025 (CN); LIU, Boyang, Guiyang, Guizhou 550025 (CN)
(74) Representative: MERH-IP Matias Erny Reichl Hoffmann Patentanwälte PartG mbB
(86) International application number: PCT/CN2024/093888
(87) International publication number: WO 2024/235311

(57) **Abstract**

The present disclosure pertains to the field of cloud technologies, and provides a cloud computing technology based access management method and apparatus, and a device. The method includes: A cloud platform receives a data boundary establishment request that is input by a first tenant for a cloud service, where a data boundary includes at least one of the following constraint conditions: information about an identity subject that uses the cloud service, access resource information related to the cloud service, network information related to use of the cloud service, information about a device that initiates an access request to the cloud service, and trusted execution environment information related to the cloud service. The cloud platform establishes the data boundary for the cloud service. The cloud platform compares information carried in an access request, for the cloud service, that is received by the cloud service with the constraint condition in the data boundary; and if the information carried in the access request matches the constraint condition in the data boundary, allows the cloud service to respond to the access request; otherwise, skips allowing the cloud service to respond to the first access request. In the present disclosure, security of data on a tenant cloud can be effectively ensured.

## Description

The present disclosure claims priorities to Chinese Patent Application No. 202310564727.1, filed on May 18, 2023 and entitled "METHOD AND APPARATUS FOR IMPLEMENTING SECURITY BOUNDARY FOR CLOUD DATA BASED ON IAM, AND DEVICE", and to Chinese Patent Application No. 202311247399.9, filed on September 25, 2023 and entitled "DATA ACCESS METHOD AND APPARATUS, DEVICE, AND STORAGE MEDIUM", both of which are incorporated herein by reference in their entireties.

### TECHNICAL FIELD

The present disclosure relates to the field of cloud technologies, and in particular, to a cloud computing technology-based access management method and apparatus, and a device.

### BACKGROUND

With development of cloud computing technologies, a data center is evolving from a local data center to a cloud data center. The cloud data center may provide cloud services for a plurality of tenants and store tenant data. In addition, a cloud also provides some services and resources for a public network. This causes many security threats to the tenant data in the cloud data center. Therefore, currently, a method that can ensure security of the tenant data in the cloud data center is urgently needed.

### SUMMARY

The present disclosure provides a cloud computing technology-based access management method and apparatus, and a device, to effectively ensure security of data in a cloud data center. Corresponding technical solutions are as follows.

According to a first aspect, a cloud computing technology based access management method is provided. The method is applied to a cloud platform. The cloud platform is configured to manage infrastructure that provides a cloud service. The infrastructure includes at least one cloud data center. Each of the at least one cloud data center includes a plurality of servers. The cloud service is deployed on one or more servers in the at least one cloud data center. The method includes: The cloud platform receives a data boundary establishment request that is input by a first tenant for the cloud service, where the data boundary establishment request is used to indicate the cloud platform to establish a data boundary for the cloud service, and the data boundary includes at least one of the following constraint conditions: information about an identity subject that uses the cloud service, access resource information related to the cloud service, network information related to use of the cloud service, information about a device that initiates an access request to the cloud service, and trusted execution environment information related to the cloud service. The cloud platform establishes a data boundary for the cloud service based on the data boundary establishment request. When the cloud service receives a first access request generated by a second tenant or the first tenant for the cloud service, the cloud platform compares information carried in the first access request with the constraint condition in the data boundary; and when the information carried in the first access request matches the constraint condition in the data boundary, allows the cloud service to respond to the first access request; or when the information carried in the first access request does not match the constraint condition in the data boundary, skips allowing the cloud service to respond to the first access request, where the information carried in the first access request includes one or more of the following: first identity subject information, first access resource information, first network information, first device information for initiating the first access request, and first trusted execution environment information.

In the technical solution provided in the present disclosure, a tenant may establish, through the cloud platform according to an actual requirement of the tenant, a data boundary for a purchased cloud service; and constrain, through the data boundary, one or more of the following: an identity subject that uses the cloud service, an access resource related to the cloud service, a network related to use of the cloud service, a device that initiates an access request to the cloud service, and a trusted execution environment related to the cloud service. Further, when there is an access request for the cloud service, information carried in the access request is compared with the data boundary established by the tenant for the cloud service. If the information carried in the access request matches a constraint condition in the data boundary, the cloud service is allowed to respond to the access request. If the information carried in the access request does not match a constraint condition in the data boundary, the cloud service is not allowed to respond to the access request. In this way, security of tenant data on a cloud can be effectively ensured based on the constraint of the data boundary.

In a possible implementation, the first tenant and the second tenant are registered with the cloud platform, a role of the first tenant is an administrator of the data boundary, and a role of the second tenant is a visitor of the data boundary.

In a possible implementation, the method further includes: The cloud platform receives a constraint condition addition request that is input by the first tenant for the data boundary. The cloud platform adds, to the data boundary, a first constraint condition indicated by the constraint condition addition request, where the first constraint condition is one or more of the following: second identity subject information, second access resource information, second network information, second device information for initiating an access request, and second trusted execution environment information.

In the technical solution provided in the present disclosure, a tenant may freely add a constraint condition to an established data boundary according to an actual requirement, so that flexibility is higher, and an operation is simple.

In a possible implementation, the method further includes: The cloud platform receives a constraint condition removal request that is input by the first tenant for the data boundary. The cloud platform removes, from the data boundary, a second constraint condition indicated by the constraint condition removal request, where the second constraint condition is one or more of the following: third identity subject information, third access resource information, third network information, third device information for initiating an access request, and third trusted execution environment information.

In the technical solution provided in the present disclosure, a tenant may freely remove a constraint condition from an established data boundary according to an actual requirement, so that flexibility is higher, and an operation is simple.

In a possible implementation, the method further includes: The cloud platform receives a data boundary deletion request that is input by the first tenant for the cloud service. The cloud platform deletes the data boundary indicated by the data boundary deletion request.

In the technical solution provided in the present disclosure, a tenant may delete an established data boundary according to an actual requirement, so that flexibility is higher, and an operation is simple.

In a possible implementation, the method further includes: The cloud platform receives a data boundary function disabling request that is input by the first tenant for the cloud service. The cloud platform disables a data boundary function for the cloud service.

In the technical solution provided in the present disclosure, a tenant may disable a data boundary function for a cloud service according to an actual requirement, so that operation flexibility is higher, and an operation is simple.

In a possible implementation, the method further includes: The cloud platform receives a data boundary function enabling request that is input by the first tenant for the cloud service. The cloud platform enables a data boundary function for the cloud service.

In the technical solution provided in the present disclosure, a tenant may enable a data boundary function for a cloud service according to an actual requirement, so that operation flexibility is higher, and an operation is simple.

According to a second aspect, a cloud computing technology-based access management apparatus is provided. The apparatus is used in a cloud platform. The cloud platform is configured to manage infrastructure that provides a cloud service. The infrastructure includes at least one cloud data center. Each of the at least one cloud data center includes a plurality of servers. The cloud service is deployed on one or more servers in the at least one cloud data center. The method includes:
a management module, configured to: receive a data boundary establishment request that is input by a first tenant for the cloud service, where the data boundary establishment request is used to indicate the cloud platform to establish a data boundary for the cloud service, and the data boundary includes at least one of the following constraint conditions: information about an identity subject that uses the cloud service, access resource information related to the cloud service, network information related to use of the cloud service, information about a device that initiates an access request to the cloud service, and trusted execution environment information related to the cloud service; and establish a data boundary for the cloud service based on the data boundary establishment request; and
an authentication module, configured to: when the cloud service receives a first access request generated by a second tenant or the first tenant for the cloud service, compare information carried in the first access request with the constraint condition in the data boundary, and when the information carried in the first access request matches the constraint condition in the data boundary, allow the cloud service to respond to the first access request, or when the information carried in the first access request does not match the constraint condition in the data boundary, skip allowing the cloud service to respond to the first access request, where the information carried in the first access request includes one or any combination of the following: first identity subject information, first access resource information, first network information, first device information for initiating the first access request, and first trusted execution environment information.

In a possible implementation, the first tenant and the second tenant are registered with the cloud platform, a role of the first tenant is an administrator of the data boundary, and a role of the second tenant is a visitor of the data boundary.

In a possible implementation, the management module is further configured to:
receive a constraint condition addition request that is input by the first tenant for the data boundary; and
add, to the data boundary, a first constraint condition indicated by the constraint condition addition request, where the first constraint condition is one or more of the following: second identity subject information, second access resource information, second network information, second device information for initiating an access request, and second trusted execution environment information.

In a possible implementation, the management module is further configured to:
receive a constraint condition removal request that is input by the first tenant for the data boundary; and
remove, from the data boundary of the server, a second constraint condition indicated by the constraint condition removal request, where the first constraint condition is one or more of the following: third identity subject information, third access resource information, third network information, third device information for initiating an access request, and third trusted execution environment information.

In a possible implementation, the management module is further configured to:
receive a data boundary deletion request that is input by the first tenant for the cloud service; and
delete the data boundary indicated by the data boundary deletion request.

In a possible implementation, the management module is further configured to:
receive a data boundary function disabling request that is input by the first tenant for the cloud service; and
disable a data boundary function for the cloud service.

In a possible implementation, the management module is further configured to:
receive a data boundary function enabling request that is input by the first tenant for the cloud service; and
enable a data boundary function for the cloud service.

According to a third aspect, a computing device cluster is provided, and includes at least one computing device. Each computing device includes a processor and a memory. A processor of the at least one computing device is configured to execute instructions stored in a memory of the at least one computing device, to enable the computing device cluster to perform the cloud computing-based access management method provided in the first aspect.

According to a fourth aspect, a computer program product including instructions is provided. When the instructions are run by a computing device cluster, the computing device cluster is enabled to perform the cloud computing based access management method provided in the first aspect.

According to a fifth aspect, a computer-readable storage medium is provided, and includes computer program instructions. When the computer program instructions are executed by a computing device cluster, the computing device cluster performs the cloud computing based access management method provided in the first aspect.

### BRIEF DESCRIPTION OF DRAWINGS

FIG. 1 is a diagram of an implementation scenario according to an embodiment of the present disclosure;
FIG. 2 is a schematic flowchart of a cloud computing based access management method according to an embodiment of the present disclosure;
FIG. 3 is a diagram of a data boundary according to an embodiment of the present disclosure;
FIG. 4 is a diagram of a data boundary according to an embodiment of the present disclosure;
FIG. 5 is a diagram of a data boundary according to an embodiment of the present disclosure;
FIG. 6 is a diagram of a data boundary according to an embodiment of the present disclosure;
FIG. 7 is a schematic flowchart of a cloud computing based access management method according to an embodiment of the present disclosure;
FIG. 8 is a diagram of a structure of a cloud computing based access management apparatus according to an embodiment of the present disclosure;
FIG. 9 is a diagram of a structure of a computer device according to an embodiment of the present disclosure;
FIG. 10 is a diagram of a structure of a computer device cluster according to an embodiment of the present disclosure; and
FIG. 11 is a diagram of a structure of a computer device cluster according to an embodiment of the present disclosure.

### DESCRIPTION OF EMBODIMENTS

To make the objectives, technical solutions, and advantages of the present disclosure clearer, the following further describes implementations of the present disclosure in detail with reference to the accompanying drawings.

The following first describes some terms used in implementations of the present disclosure, to help persons skilled in the art to understand the present disclosure.

Cloud platform and infrastructure: The cloud platform is configured to manage infrastructure of a cloud vendor. The infrastructure is a plurality of cloud data centers deployed in different regions, where at least one cloud data center is deployed in each region. The cloud platform may provide an interface related to a cloud computing service, for example, a configuration page or an application programming interface (Application Programming Interface, API), for a tenant to access a cloud service. The tenant may log in to the cloud platform by using a pre-registered account and password, and after the login succeeds, select and purchase a cloud service provided by a cloud data center in a predetermined region. The cloud service is, for example, an object storage service, a database service, a messaging queue service, or another known cloud service.

Tenant: The tenant is a top-level object used to manage a cloud service and/or a cloud resource. The tenant registers a tenant account and sets a tenant password on a cloud platform through a local client (for example, a browser). The local client remotely logs in to the cloud platform through the local client by using the tenant account and the specified tenant password. The cloud platform provides a configuration interface or an API for the tenant to configure and use a cloud service. The cloud service is specifically provided by infrastructure managed by the cloud platform.

Virtual private cloud (Virtual Private Cloud, VPC): The VPC is a dynamic configuration pool of public cloud computing resources, and needs to use an encryption protocol, a tunneling protocol, and other security programs to transmit data between an enterprise and a cloud service provider. The VPC builds, for an elastic cloud server, an isolated virtual network environment that is autonomously configured and managed by a user, to improve security of cloud resources of the user, and simplify network deployment of the user. Network characteristics such as a security group, a virtual private network (Virtual Private Network, VPN), an IP address segment, and bandwidth may be defined in the VPC. A tenant may easily manage and configure an internal network through the VPC, to securely and efficiently perform a network change.

Embodiments of the present disclosure provide a cloud computing technology based access management method. The method may be applied to a cloud platform. The cloud platform is configured to manage infrastructure that provides a cloud service. The infrastructure includes at least one cloud data center. Each of the at least one cloud data center includes a plurality of servers. The cloud service is deployed on one or more servers in the at least one cloud data center. With reference to the accompanying drawings, the following describes an example implementation scenario of the cloud computing technology based access management method provided in embodiments of the present disclosure.

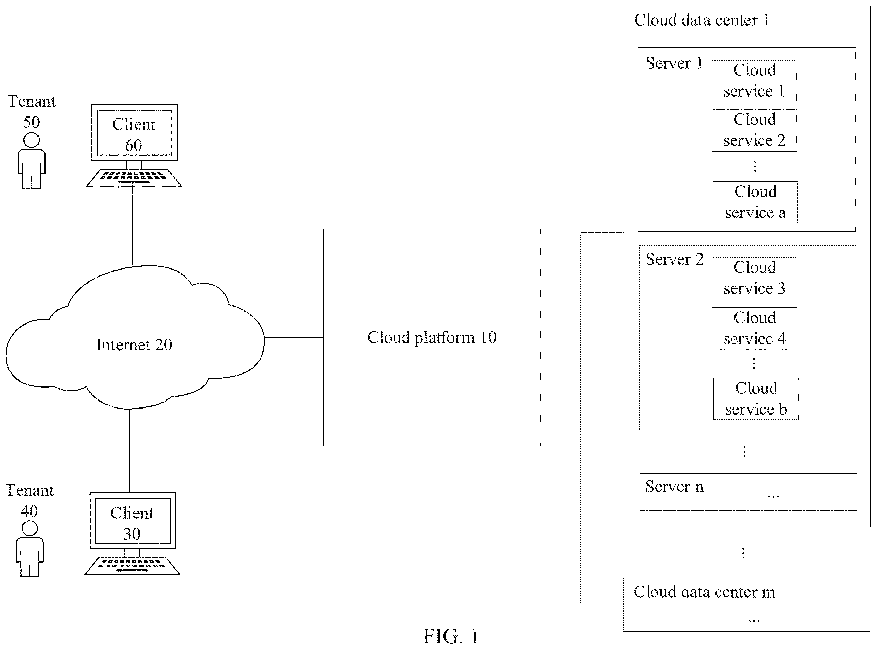

FIG. 1 is a diagram of an implementation scenario according to an embodiment of the present disclosure. As shown in FIG. 1, the implementation scenario includes a cloud platform 10, a cloud data center 1, ..., and a cloud data center m. A plurality of servers are deployed in each cloud data center. For example, a server 1, a server 2, ..., and a server n are deployed in the cloud data center 1. Cloud services, such as a cloud service 1, a cloud service 2, ..., and a cloud service a, are deployed on the server. A tenant 40 may log in to the cloud platform 10 through a client 30 and the Internet 20 by using a tenant account and a password that are pre-registered with the cloud platform 10, purchase a cloud service through the cloud platform 10, and establish a data boundary for a cloud service that has been purchased by the tenant 40. A tenant 50 may log in to the cloud platform 10 through a client 60 and the Internet 20 by using a tenant account and a password that are pre-registered with the cloud platform 10, purchase a cloud service through the cloud platform 10, and establish a data boundary for a cloud service that has been purchased by the tenant 50. The tenant 50 or the tenant 40 may store data by using the purchased cloud service. However, because the cloud data center may provide services for a plurality of tenants and may also provide a service for a public network, tenant data faces many security threats. The following describes security threats to tenant data on a cloud.

For example, the cloud service is an object storage service. The tenant 40 may purchase at least one storage bucket (storage bucket), for example, a storage bucket 1 or a storage bucket 2, according to an actual requirement, and store data in the storage bucket. For the tenant 40, data of the tenant 50 on the cloud may face the following security threats.

Security threat 1: an attack from an external attacker. The external attacker holds a valid credential of the tenant 40 and directly accesses the storage bucket (for example, the storage bucket 1 or the storage bucket 2) of the tenant 50 to obtain data of the tenant 40, causing leakage of data of the tenant 50.

Security threat 2: an attack from another tenant (for example, the tenant 50) on the cloud. Due to incorrect or malicious authorization configuration of resources, an unexpected tenant (for example, the tenant 50) may access the storage bucket (for example, the storage bucket 1 or the storage bucket 2) of the tenant 40 to obtain data of the tenant 40, causing leakage of data of the tenant 40.

Security threat 3: an attack from an internal person or malicious code. Data that should be stored in the storage bucket 1 or the storage bucket 2 of the tenant 40 are written into a storage bucket of another tenant by an internal person of the tenant 40 or through malicious code, causing leakage of data of the tenant 40.

Embodiments of the present disclosure provide a cloud computing technology based access management method. In the method, a tenant may establish, through a cloud platform according to an actual requirement of the tenant, a data boundary for a purchased cloud service; and constrain, through the data boundary, one or more of the following: an identity subject that uses the cloud service, an access resource related to the cloud service, a network related to use of the cloud service, a device that initiates an access request to the cloud service, and a trusted execution environment related to the cloud service. Further, when there is an access request for the cloud service, information carried in the access request is compared with the data boundary established by the tenant for the cloud service. If the information carried in the access request matches a constraint condition in the data boundary, the cloud service is allowed to respond to the access request. If the information carried in the access request does not match a constraint condition in the data boundary, the cloud service is not allowed to respond to the access request. In this way, security of tenant data on a cloud can be effectively ensured based on the constraint of the data boundary. With reference to the accompanying drawings, the following describes the cloud computing technology-based access management method provided in embodiments of the present disclosure.

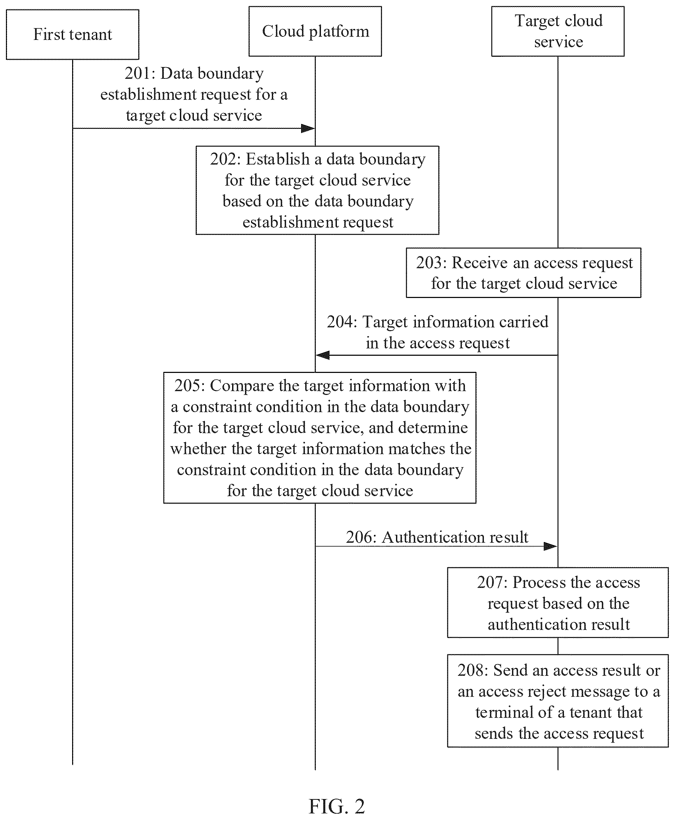

As shown in FIG. 2, a processing process of a cloud computing technology based access management method provided in an embodiment of the present disclosure may include the following steps.

Step 201: A first tenant sends a data boundary establishment request for a target cloud service to a cloud platform through a terminal.

The first tenant is any tenant that has purchased the target cloud service, for example, the tenant 40 or the tenant 50 in FIG. 1.

During implementation, after purchasing the target cloud service, to ensure security of data on a cloud, the first tenant may send the data boundary establishment request for the target cloud service to the cloud platform through the terminal, to indicate the cloud platform to establish a data boundary for the target cloud service. In the data boundary establishment request, different constraint conditions included in the data boundary are carried in different fields. The constraint condition may include one or more of the following: information about an identity subject that uses the target cloud service, access resource information related to the target cloud service, network information related to use of the target cloud service, information about a device that initiates an access request to the target cloud service, and trusted execution environment information related to the target cloud service. The foregoing constraint conditions are described below.

Information about the identity subject that uses the target cloud service: The information about the identity subject may be an identifier of an identity access management (Identity and Access Management, IAM) identity established by a tenant for a member in an organization (Organizations). The first tenant may be an enterprise. The first tenant may establish, through an organization service provided by the cloud platform, an organization corresponding to the first tenant. An employee in the enterprise is mapped to a member in the organization. The first tenant may establish a corresponding IAM identity for each member in the organization, and the member may use the IAM identity to access the target cloud service purchased by the tenant. The constraint condition may be used to specify IAM identities that are allowed to access the target cloud service.

Access resource information related to the target cloud service: The access resource information may be resource information of the target cloud service purchased by the first tenant. For example, the target cloud service is an object storage service, and the access resource information may be an identifier of a storage bucket. For example, the target cloud service is a database service, and the access resource information may be an identifier of a database. The constraint condition may be used to specify resources of the target cloud service that are allowed to be accessed.

Network information related to use of the target cloud service: The network information may be an identifier of a virtual private cloud (Virtual Private Cloud, VPC) or an identifier of a public network. The network information related to use of the target cloud service may be used to specify networks that are allowed to access the target cloud service.

Information about the device that initiates the access request to the target cloud service: The information about the device may be device information of a device used to initiate an access request to the target cloud service, and the device information indicates an operating system of the device, whether a security scanning application is installed, or the like. The constraint condition may be used to specify a specific type of device that is allowed to access the target cloud service.

Trusted execution environment information related to the target cloud service: The trusted execution environment information may be execution environment information corresponding to a trusted execution environment of a target application that accesses the target cloud service, and the execution environment information indicates whether a device that executes the application supports a trusted platform module (trusted platform module, TPM), whether memory protection is supported, or the like.

The following describes step 201 by using examples.

Example 1: The first tenant needs to establish a data boundary for a purchased object storage service, to implement the following constraint: Only an IAM identity 1 and an IAM identity 2 can access a storage bucket 1 and a storage bucket 2 in a trusted execution environment 1 through a VPC 1 by using a device 1. Correspondingly, the data boundary establishment request sent by the terminal carries an identifier P1 of the IAM identity 1, an identifier P2 of the IAM identity 2, trusted execution environment information E1 of the trusted execution environment 1, device information D1 of the device, an identifier N1 of the VPC 1, an identifier R1 of the storage bucket 1, and an identifier R2 of the storage bucket 2.

Example 2: The first tenant needs to establish a data boundary for a purchased object storage service to implement the following constraint: Only an IAM identity 3, an IAM identity 4, and an IAM identity 5 can access a storage bucket 3 through a VPC 2. Correspondingly, the data boundary establishment request sent by the terminal carries an identifier P3 of the IAM identity 3, an identifier P4 of the IAM identity 4, an identifier P5 of the IAM identity 5, an identifier N2 of the VPC 2, and an identifier R3 of the storage bucket 3.

Step 202: The cloud platform establishes a data boundary for the target cloud service based on the data boundary establishment request.

During implementation, after receiving the data boundary establishment request sent by the terminal, the cloud platform obtains the constraint condition carried in the data boundary establishment request, and establishes a data boundary including the constraint condition.

With reference to the foregoing example 1, the data boundary establishment request carries P1, P2, E1, D1, N1, R1, and R2. In this case, the cloud platform establishes a data boundary for the target cloud service, where the data boundary includes P1, P2, E1, D1, N1, R1, and R2.

With reference to the foregoing example 2, the data boundary establishment request carries P3, P4, P5, N2, and R3. In this case, the cloud platform establishes a data boundary for the target cloud service, where the data boundary includes P3, P4, P5, N2, and R3.

Step 203: The target cloud service receives an access request for the target cloud service.

During implementation, when a tenant needs to use the target cloud service, the tenant may send an access request to the target cloud service through a device. Correspondingly, the target cloud service receives the access request sent by the tenant. The tenant may be the first tenant, or may be a tenant registered with the cloud platform other than the first tenant. The access request carries target information, and the target information includes one or more of the following: first identity subject information, first access resource information, first network information, first device information for initiating the access request, and first trusted execution environment information.

Step 204: The target cloud service sends the target information carried in the access request to the cloud platform.

During implementation, after receiving the access request, the target cloud service obtains the target information carried in the access request, and sends the target information to the cloud platform.

Step 205: The cloud platform compares the target information with the constraint condition in the data boundary for the target cloud service, and determines whether the target information matches the constraint condition in the data boundary for the target cloud service.

During implementation, the cloud platform may obtain data boundaries for the target cloud service, and sequentially compare the target information with constraint conditions in the data boundaries for the target cloud service, to determine whether the target information matches a constraint condition in any data boundary for the target cloud service. The following describes comparison between the target information and a constraint condition in any data boundary by using an example in which the target information includes five types of information (the first identity subject information, the first access resource information, the first network information, the first device information for initiating the access request, and the first trusted execution environment information) and the data boundary includes five constraint conditions (the information about the identity subject that uses the target cloud service, the access resource information related to the target cloud service, the network information related to use of the target cloud service, the information about the device that initiates the access request to the target cloud service, and the trusted execution environment information related to the target cloud service).

Comparison in terms of identity subject information: The first identity subject information in the target information is compared with the information about the identity subject that uses the target cloud service in the data boundary. If the information about the identity subject that uses the target cloud service includes the first identity subject information, it is determined that the first identity subject information matches the information about the identity subject that uses the target cloud service; otherwise, it is determined that the first identity subject information does not match the information about the identity subject that uses the target cloud service.

Comparison in terms of access resource information: The first access resource information in the target information is compared with the access resource information related to the target cloud service in the data boundary. If the access resource information related to the target cloud service includes the first access resource information, it is determined that the first access resource information matches the access resource information related to the target cloud service; otherwise, it is determined that the first access resource information does not match the access resource information related to the target cloud service.

Comparison in terms of network information: The first network information in the target information is compared with the network information related to use of the target cloud service in the data boundary. When the first network information is an identifier of a VPC, whether the network information related to use of the target cloud service includes the first network information is determined. If the network information related to use of the target cloud service includes the first network information, it is determined that the first network information matches the network information related to use of the target cloud service; otherwise, it is determined that the first network information does not match the network information related to use of the target cloud service. When the first network information is related information (for example, a destination IP address) of a public network, whether the network information related to the target cloud service includes an identifier of the public network is determined. If the network information related to the target cloud service includes the identifier of the public network, it is determined that the first network information matches the network information related to the target cloud service; otherwise, it is determined that the first network information does not match the network information related to the target cloud service.

Comparison in terms of device information: The first device information in the target information is compared with the information about the device that initiates the access request to the target cloud service in the data boundary. If the information about the device that initiates the access request to the target cloud service includes the first device information, it is determined that the first device information matches the information about the device that initiates the access request to the target cloud service; otherwise, it is determined that the first device information does not match the information about the device that initiates the access request to the target cloud service.

Comparison in terms of trusted execution environment information: The first trusted execution environment information in the target information is compared with the trusted execution environment information related to the target cloud service in the data boundary. If the trusted execution environment information related to the target cloud service includes the first trusted execution environment information, it is determined that the first trusted execution environment information matches the trusted execution environment information related to the target cloud service; otherwise, it is determined that the first trusted execution environment information does not match the trusted execution environment information related to the target cloud service.

If the five types of information included in the target information match the five constraint conditions included in the data boundary, it is determined that the target information matches the constraint condition in the data boundary. If any one of the five types of information does not match a corresponding constraint condition in the data boundary, it is determined that the target information does not match the constraint condition in the data boundary.

The following describes step 205 by using examples.

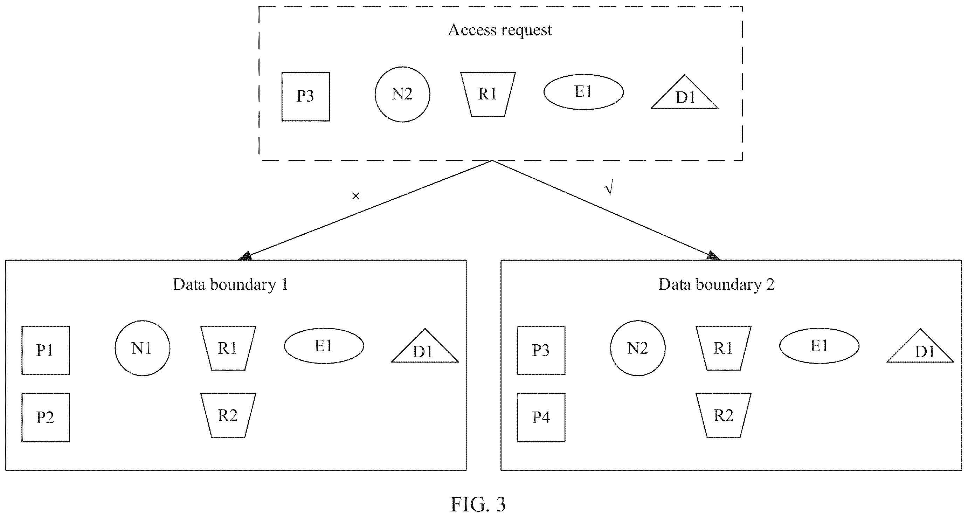

Example 1: As shown in FIG. 3, the target information includes first identity subject information P3, first trusted execution environment information E1, first device information D1, first network information N2, and first access resource information R1. The data boundary for the target cloud service includes a data boundary 1 and a data boundary 2. The data boundary 1 includes P1, P2, E1, D1, N1, R1, and R2, and the data boundary 2 includes P3, P4, E1, D1, N2, R1, and R2. The target information is first compared with the constraint conditions in the data boundary 1, and it is determined that P1 and N2 are not included in the data boundary 1. In this case, it is determined that the target information does not match the constraint conditions in the data boundary 1. Then the target information is compared with the constraint conditions in the data boundary 2, and it is determined that all of the five types of information in the target information are in the data boundary 1. In this case, it is determined that the target information matches the constraint conditions in the data boundary 1. Further, it is determined that the target information matches the constraint condition in the data boundary for the target cloud service.

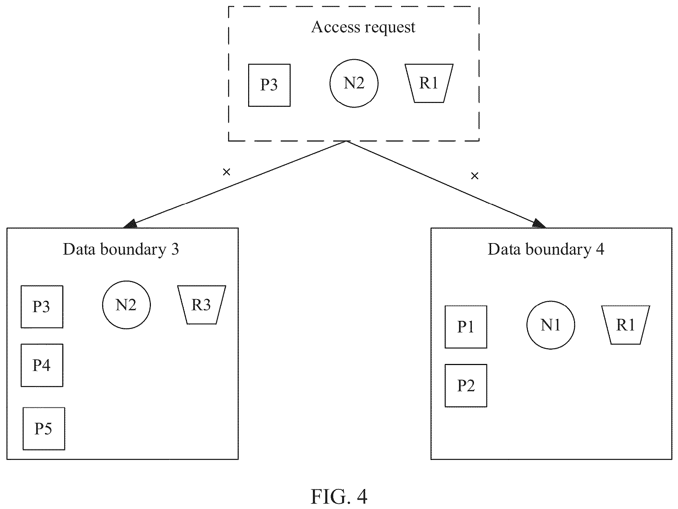

Example 2: As shown in FIG. 4, the target information includes first identity subject information P3, first network information N2, and first access resource information R1. The data boundary for the target cloud service includes a data boundary 3 and a data boundary 4. The data boundary 3 includes P3, P4, P5, N2, and R3, and the data boundary 4 includes P1, P2, N1, and R1. The target information is first compared with the constraint conditions in the data boundary 3, and it is determined that R1 is not included in the data boundary 3. In this case, it is determined that the target information does not match the constraint conditions in the data boundary 3. Then the target information is compared with the constraint conditions in the data boundary 4, and it is determined that P3 and N2 are not included in the data boundary 4. In this case, it is determined that the target information does not match the constraint conditions in the data boundary 4. Further, it is determined that the target information does not match the constraint condition in the data boundary for the target cloud service.

Step 206: The cloud platform sends an authentication result for the access request to the target cloud service.

During implementation, if determining that the target information matches the constraint condition in the data boundary for the target cloud service, the cloud platform sends an authentication success message to the target cloud service; or if determining that the target information does not match the constraint condition in the data boundary for the target cloud service, the cloud platform sends an authentication failure message to the target cloud service.

Step 207: The target cloud service processes the access request based on the authentication result.

During implementation, if receiving the authentication success message returned by the cloud platform, the target cloud service executes the access request; or if receiving the authentication failure message returned by the cloud platform, the target cloud service rejects the access request.

Step 208: The target cloud service sends an access result or an access reject message to a terminal of the tenant that sends the access request.

During implementation, if executing the access request, the target cloud service sends the access result obtained through execution to the terminal of the tenant; or if rejecting the access request, the target cloud service sends the access reject message to the terminal of the tenant.

In a possible implementation, for an established data boundary, the first tenant may add a constraint condition to or remove a constraint condition from the data boundary through the cloud platform, or may delete the data boundary, disable a data boundary function for the target cloud service, or enable a data boundary function for the target cloud service. The functions are separately described below.

Adding a constraint condition: If the first tenant needs to add a constraint condition to a first data boundary, the first tenant may send a constraint condition addition request to the cloud platform through the terminal, where the constraint condition addition request carries a to-be-added first constraint condition and an identifier of the first data boundary. Correspondingly, after receiving the constraint condition addition request, the cloud platform adds the first constraint condition to the first data boundary. The identifier of the first data boundary may be generated by the terminal and carried in the data boundary establishment request when the terminal sends the data boundary establishment request to the cloud platform; or may be generated by the cloud platform when establishing the first data boundary, where the cloud platform returns the generated identifier of the first data boundary to the terminal. The following describes an example of adding a constraint condition.

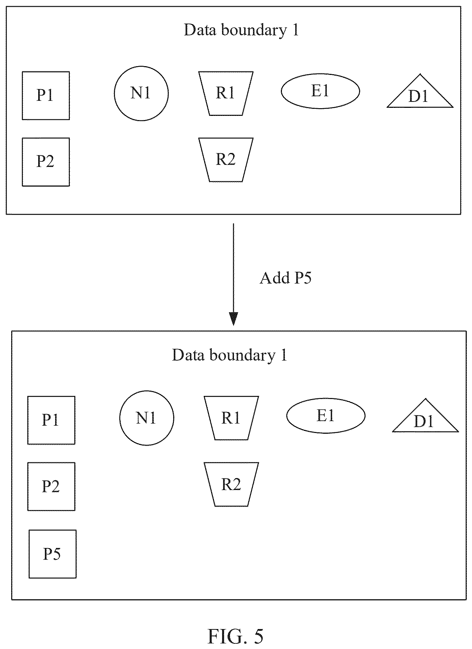

As shown in FIG. 5, a data boundary 1 includes P1, P2, E1, D1, N1, R1, and R2. The first tenant needs to add, to the data boundary 1, identity subject information P5 for using the target cloud service, and therefore sends a constraint condition addition request to the cloud platform through the terminal, where the constraint condition addition request carries P5 and an identifier of the data boundary 1. After receiving the constraint condition addition request, the cloud platform adds the identity subject information P5 for using the target cloud service to the data boundary 1.

Removing a constraint condition: If the first tenant needs to remove one or more constraint conditions from a second data boundary, the first tenant may send a constraint condition removal request to the cloud platform through the terminal, where the constraint condition removal request carries a to-be-removed second constraint condition and an identifier of the second data boundary. Correspondingly, after receiving the removal request, the cloud platform removes the second constraint condition from the second data boundary. The following describes an example of removing a constraint condition.

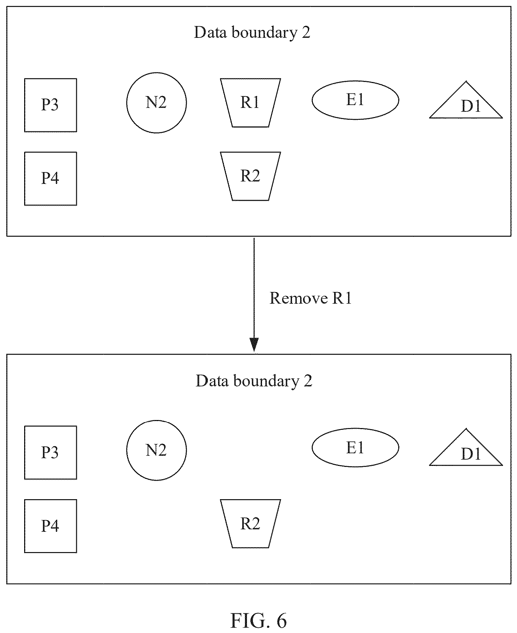

As shown in FIG. 6, a data boundary 2 includes P3, P4, E1, D1, N2, R1, and R2. The first tenant is to remove the access resource information R1 related to the target cloud service from the data boundary 2, and therefore sends a constraint condition removal request to the cloud platform through the terminal, where the constraint condition removal request carries R1 and an identifier of the data boundary 2. After receiving the constraint condition removal request, the cloud platform removes the access resource information R1 related to the target cloud service from the data boundary 2.

Deleting a data boundary: If the first tenant needs to delete a third data boundary, the first tenant may send a data boundary deletion request for the target cloud service to the cloud platform through the terminal, where the data boundary deletion request carries an identifier of the third data boundary. Correspondingly, after receiving the data boundary deletion request, the cloud platform deletes the third data boundary for the target cloud service.

Disabling a data boundary function: If the first tenant needs to disable a data boundary function for the target cloud service, the first tenant may send a data boundary disabling request for the target cloud service to the cloud platform through the terminal. Correspondingly, after receiving the data boundary disabling request for the target cloud service, the cloud platform disables all data boundaries established by the first tenant for the target cloud service.

Enabling a data boundary function: If the first tenant is to enable a data boundary function for the target cloud service, the first tenant may send a data boundary enabling request for the target cloud service to the cloud platform through the terminal. Correspondingly, after receiving the data boundary enabling request for the target cloud service, the cloud platform enables all data boundaries established by the first tenant for the target cloud service.

In a possible implementation, the cloud platform may provide an application programming interface (Application Programming Interface, API) for establishing a data boundary, adding a constraint condition, removing a constraint condition, deleting a data boundary, disabling a data boundary function, or enabling a data boundary function.

Correspondingly, the terminal may send a data boundary establishment request to the cloud platform by invoking an API for establishing a data boundary, send a constraint condition addition request to the cloud platform by invoking an API for adding a constraint condition, send a constraint condition removal request to the cloud platform by invoking an API for removing a constraint condition, send a data boundary deletion request to the cloud platform by invoking an API for deleting a data boundary, send a data boundary disabling request to the cloud platform by invoking an API for disabling a data boundary, or send a data boundary enabling request to the cloud platform by invoking an API for enabling a data boundary.

In a possible implementation, to improve efficiency of establishing a data boundary by a tenant, in this embodiment of the present disclosure, a constraint condition may be added to the data boundary at a granularity of an organization unit. The organization unit may correspond to a department, a subsidiary, a project team, or the like in an enterprise. Correspondingly, processing of step 201 may be as follows:

When the first tenant establishes a data boundary, if the data boundary needs to include all IAM identities in a first organization unit, an identifier of the first organization unit is carried in a field that is in the data boundary establishment request sent by the terminal and that is used to carry the information about the identity subject that uses the target cloud service; or if the data boundary needs to exclude an identity in an organization, indication information of an identity outside the organization is carried in a field that is in the data boundary establishment request and that is used to carry the information about the identity subject that uses the target cloud service. If the data boundary needs to include all resources of the target cloud service in the first organization unit, the identifier of the first organization unit is carried in a field that is in the data boundary establishment request sent by the terminal and that is used to carry the access resource information related to the target cloud service. If the data boundary is expected to include all networks in the first organization unit, the identifier of the first organization unit is carried in a field that is in the data boundary establishment request sent by the terminal and that is used to carry the network information related to use of the target cloud service; or if the data boundary is expected to include a network outside an organization, indication information of the network outside the organization is carried in a field that is in the data boundary establishment request and that is used to carry the network information related to use of the target cloud service. The following describes the foregoing processing by using examples.

Example 1: The first tenant needs to establish a data boundary for a purchased object storage service to implement the following constraint: Only all IAM identities in an organization unit 1 can access a resource of an object storage service in the organization unit 1 through a network in the organization unit 1. Correspondingly, in the data boundary establishment request sent by the terminal, the field used to carry the information about the identity subject that uses the target cloud service carries an identifier of the organization unit 1, the field used to carry the access resource information related to the target cloud service carries the identifier of the organization unit 1, and the field used to carry the network information related to use of the target cloud service carries the identifier of the organization unit 1.

Example 2: The first tenant needs to establish a data boundary for a purchased object storage service to implement the following constraint: Only an identity outside an organization can access a resource of an object storage service in an organization unit 2 through a network outside the organization. Correspondingly, in the data boundary establishment request sent by the terminal, the field used to carry the information about the identity subject that uses the target cloud service carries indication information of the identity outside the organization, the field used to carry the access resource information related to the target cloud service carries an identifier of the organization unit 2, and the field used to carry the network information related to use of the target cloud service carries indication information of the network outside the organization.

In this possible implementation, processing of step 202 may be as follows:
After receiving the data boundary establishment request sent by the terminal, if determining that the field, in the data boundary establishment request, used to carry the information about the identity subject that uses the target cloud service carries the identifier of the first organization unit, the cloud platform adds all of the IAM identities in the first organization unit to the data boundary as the information about the identity subject that uses the target cloud service; or if determining that the field used to carry the information about the identity subject that uses the target cloud service carries the indication information of the identity outside the organization, the cloud platform adds the indication information of the identity outside the organization to the data boundary as the information about the identity subject that uses the target cloud service. If determining that the field, in the data boundary establishment request, used to carry the access resource information related to the target cloud service carries the identifier of the first organization unit, the cloud platform adds information about all of the resources of the target cloud service in the first organization unit to the data boundary as the access resource information related to the target cloud service. If determining that the field, in the data boundary establishment request, used to carry the network information related to use of the target cloud service carries the identifier of the first organization unit, the cloud platform adds information about all of the networks in the first organization unit to the data boundary as the network information related to use of the target cloud service; or if determining that the field used to carry the network information related to use of the target cloud service carries the indication information of the network outside the organization, the cloud platform adds the indication information of the network outside the organization to the data boundary as the network information related to use of the target cloud service. Then the cloud platform records a correspondence between the data boundary and the organization corresponding to the first tenant. The following describes an example of establishing a data boundary.

With reference to the foregoing example 1, in the data boundary establishment request, the field used to carry the information about the identity subject that uses the target cloud service carries the identifier of the organization unit 1, the field used to carry the access resource information related to the target cloud service carries the identifier of the organization unit 1, and the field used to carry the network information related to use of the target cloud service carries the identifier of the organization unit 1. Correspondingly, the cloud platform establishes a data boundary, where the data boundary includes all of the IAM identities in the organization unit 1, identifiers of all VPCs in the organization unit 1, and identifiers of all storage buckets in the organization unit 1.

With reference to the foregoing example 2, in the data boundary establishment request, the field used to carry the information about the identity subject that uses the target cloud service carries the indication information of the identity outside the organization, the field used to carry the access resource information related to the target cloud service carries the identifier of the organization unit 2, and the field used to carry the network information related to use of the target cloud service carries the indication information of the network outside the organization. Correspondingly, the cloud platform establishes a data boundary, where the data boundary includes the indication information of the identity outside the organization, the indication information of the network outside the organization, and identifiers of all storage buckets in the organization unit 2.

In this possible implementation, processing of step 205 may be as follows:
An example in which the target information includes the first identity subject information, the first access resource information, and the first network information is used for description. A first organization to which the first identity subject information belongs, a second organization to which the first access resource information belongs, and a third organization to which the first network information belongs are determined, where the first organization, the second organization, and the third organization may be a same organization or different organizations. A data boundary established by the first organization for the target cloud service, a data boundary established by the second organization for the target cloud service, and a data boundary established by the third organization for the target cloud service are obtained. The target information is sequentially compared with each data boundary. The following separately describes comparison between different types of information in the target information and different constraint conditions in the data boundary.

Comparison in terms of identity subject information: The first identity subject information in the target information is compared with information about an identity subject that uses the target cloud service in the data boundary. When the information about the identity subject that uses the target cloud service in the data boundary is indication information of an identity outside an organization, whether the first identity subject information belongs to an organization corresponding to the data boundary is determined. If the first identity subject information belongs to the organization corresponding to the data boundary, it is determined that the first identity subject information does not match the information about the identity subject that uses the target cloud service; otherwise, it is determined that the first identity subject information matches the information about the identity subject that uses the target cloud service. When the information about the identity subject that uses the target cloud service in the data boundary is not indication information of an identity outside an organization, whether the information about the identity subject that uses the target cloud service in the data boundary includes the first identity subject information is determined. If the information about the identity subject that uses the target cloud service includes the first identity subject information, it is determined that the first identity subject information matches the information about the identity subject that uses the target cloud service; otherwise, it is determined that the first identity subject information does not match the information about the identity subject that uses the target cloud service.

Comparison in terms of network information: The first network information in the target information is compared with network information related to use of the target cloud service in the data boundary. When the network information related to use of the target cloud service in the data boundary is indication information of a network outside an organization, whether the first network information belongs to the organization corresponding to the data boundary is determined. If the first network information belongs to the organization corresponding to the data boundary, it is determined that the first network information does not match the network information related to use of the target cloud service; otherwise, it is determined that the first network information matches the network information related to use of the target cloud service. When the network information related to use of the target cloud service in the data boundary is not indication information of a network outside an organization, whether the network information related to use of the target cloud service includes the first network information is determined. If the network information related to use of the target cloud service includes the first network information, it is determined that the first network information matches the network information related to use of the target cloud service; otherwise, it is determined that the first network information does not match the network information related to use of the target cloud service.

Comparison in terms of access resource information: The first access resource information in the target information is compared with access resource information related to the target cloud service in the data boundary. If the access resource information related to the target cloud service includes the first access resource information, it is determined that the first access resource information matches the access resource information related to the target cloud service; otherwise, it is determined that the first access resource information does not match the access resource information related to the target cloud service.

The following describes the foregoing processing by using an example.

The target information includes first identity subject information P3, first network information I, and first access resource information R1. The cloud platform determines that the first identity subject information P3 belongs to an organization 1, the first network information I is related information of a public network and does not belong to any organization, and the first access resource information R1 belongs to the organization 1; and then obtains a data boundary established by the organization 1 for the target cloud service are obtained, where the data boundary includes a data boundary 5 and a data boundary 6. The data boundary 5 includes all IAM identities (for example, P1, P2, P3...) in an organization unit 1, information about all networks (for example, an identifier N1 of a VPC 1, an identifier N2 of a VPC 2, an identifier N3 of a VPC 3...) in the organization unit 1, and identifiers (for example, R1, R2, R3...) of all storage buckets of an object storage service in the organization unit 1, where the organization unit 1 belongs to the organization 1. The data boundary 6 includes indication information of an identity outside an organization, indication information of a network outside an organization, and identifiers (for example, R10, R20, R30...) of all storage buckets of an object storage service in an organization unit 2, where the organization unit 2 belongs to the organization 1.

The target information is compared with constraint conditions in the data boundary 5. Comparison in terms of identity information: It is determined that information about an identity subject that uses the target cloud service in the data boundary 5 is not indication information of an identity outside an organization, and the first identity subject information P3 is included in the information about the identity subject (all of the IAM identities in the organization unit 1) that uses the target cloud service in the data boundary 5. Further, it is determined that the first identity subject information matches the information about the identity subject that uses the target cloud service. Comparison in terms of network information: It is determined that network information related to use of the target cloud service in the data boundary 5 is not indication information of a network outside an organization, and the first network information is not included in the network information (information about all of the networks in the organization unit 1) related to use of the target cloud service in the data boundary 5. Further, it is determined that the first network information does not match the network information related to use of the target cloud service. Comparison in terms of access resource information: It is determined that the first access resource information R1 is included in access resource information (the identifiers of all of the storage buckets of the object storage service in the organization unit 1) related to the target cloud service in the data boundary 5. Further, it is determined that the first access resource information R1 matches the access resource information related to the target cloud service. Because the first network information does not match the network information related to use of the target cloud service, it is determined that the target information does not match the constraint conditions in the data boundary5.

The target information is compared with constraint conditions in the data boundary 6. Comparison in terms of identity information: It is determined that information about an identity subject that uses the target cloud service in the data boundary 6 is indication information of an identity outside an organization, and then it is determined that the first identity subject information P3 belongs to the organization 1. Because the data boundary 6 also belongs to the organization 1, it is determined that the first identity subject information P3 does not match the information about the identity subject that uses the target cloud service. Comparison in terms of network information: It is determined that network information related to use of the target cloud service in the data boundary 6 is indication information of a network outside an organization, and it is determined that the first network information does not belong to the organization 1. In this case, it is determined that the first network information matches the network information related to use of the target cloud service. Comparison in terms of access resource information: It is determined that the first access resource information R1 is not included in access resource information (the identifiers of all of the storage buckets of the object storage service in the organization unit 2) related to the target cloud service in the data boundary 6. Further, it is determined that the first access resource information R1 matches the access resource information related to the target cloud service. Because the first identity subject information does not match the information about the identity subject that uses the target cloud service, it is determined that the target information does not match the constraint conditions in the data boundary 6.

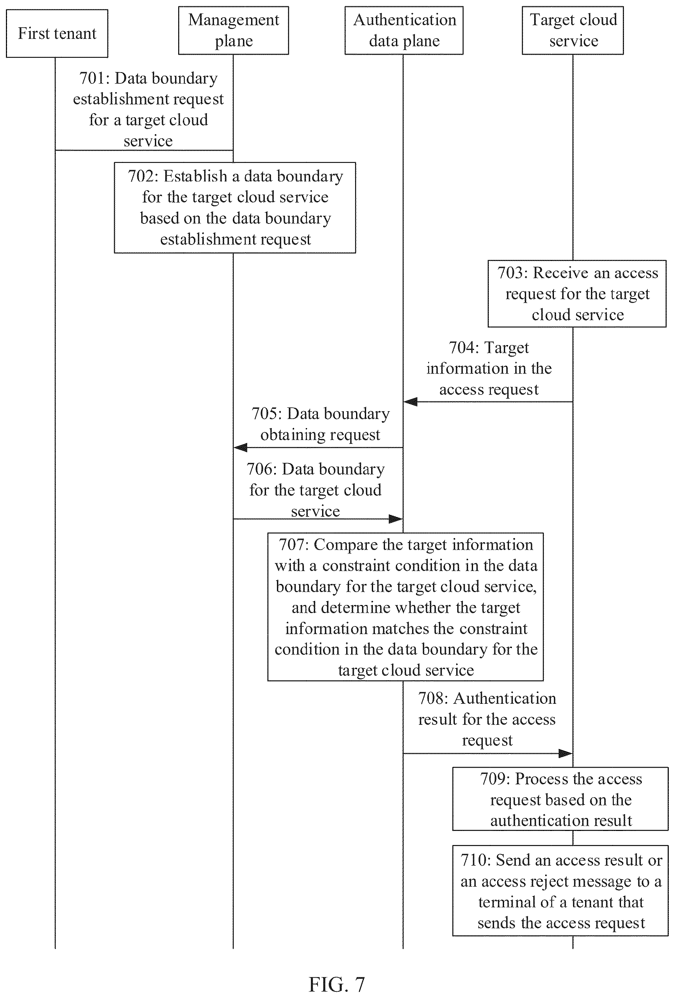

An embodiments of the present disclosure further provides a cloud computing technology based access management method. In the method, a cloud platform includes a management plane and an authentication data plane. In the steps shown in FIG. 2, the processing of the cloud platform is implemented by the management plane and the authentication data plane. Correspondingly, as shown in FIG. 7, a processing process of the method may include the following steps.

Step 701: A first tenant sends a data boundary establishment request for a target cloud service to the management plane of the cloud platform through a terminal.

A difference between step 701 and step 201 lies only in that a receiver of the data boundary establishment request changes from the cloud platform to the management plane of the cloud platform. Specific processing is not described herein again.

Step 702: The management plane establishes a data boundary for the target cloud service based on the data boundary establishment request.

A difference between step 702 and step 202 lies only in that an entity that establishes the data boundary changes from the cloud platform to the management plane of the cloud platform. Specific processing is not described herein again.

Step 703: The target cloud service receives an access request for the target cloud service.

Specific processing of step 703 is the same as the specific processing of step 203, and details are not described herein again.

Step 704: The target cloud service sends target information carried in the access request to the authentication data plane of the cloud platform.

A difference between step 704 and step 204 lies only in that a receiver of the target information carried in the access request changes from the cloud platform to the authentication data plane of the cloud platform. Specific processing is not described herein again.

Step 705: The authentication data plane sends a data boundary obtaining request to the management plane.

During implementation, after receiving the target information sent by the target cloud service, the authentication data plane sends the data boundary obtaining request to the management plane. An identifier of the target cloud service is carried in the data boundary obtaining request.

In a possible implementation, when a constraint condition in the data boundary is added at a granularity of an organization unit, after receiving the target information sent by the target cloud service, the authentication data plane may first obtain a first organization to which first identity subject information carried in the target information belongs, a second organization to which first network information carried in the target information belongs, and a third organization to which first access resource information carried in the target information belongs, and send the data boundary obtaining request to the management plane. The data boundary obtaining request carries the identifier of the target cloud service, an organization identifier of the first organization, an organization identifier of the second organization, and an organization identifier of the third organization.

Step 706: The management plane obtains the data boundary for the target cloud service, and sends the data boundary for the target cloud service to the authentication data plane.

During implementation, after receiving the data boundary obtaining request, the management plane obtains a data boundary established by each tenant for the target cloud service, and sends the obtained data boundary to the authentication data plane.

In a possible implementation, when the constraint condition in the data boundary is added at a granularity of an organization unit, the management plane obtains a data boundary established by the first organization for the target cloud service, a data boundary established by the second organization for the target cloud service, and a data boundary established by the third organization for the target cloud service, and sends the obtained data boundaries to the authentication data plane.

Step 707: The authentication data plane compares the target information with the constraint condition in the data boundary for the target cloud service, and determines whether the target information matches the constraint condition in the data boundary for the target cloud service.

Specific processing of step 707 is the same as the comparison processing of the cloud platform in step 205, and details are not described herein again.

Step 708: The authentication data plane sends an authentication result for the access request to the target cloud service.

A difference between step 708 and step 206 lies only in that a sender of the authentication result changes from the cloud platform to the authentication data plane of the cloud platform. Specific processing is not described herein again.

Step 709: The target cloud service processes the access request based on the authentication result.

Specific processing of step 709 is the same as the specific processing of step 207, and details are not described herein again.

Step 710: The target cloud service sends an access result or an access reject message to a terminal of a tenant that sends the access request.

Specific processing of step 710 is the same as the specific processing of step 208, and details are not described herein again.

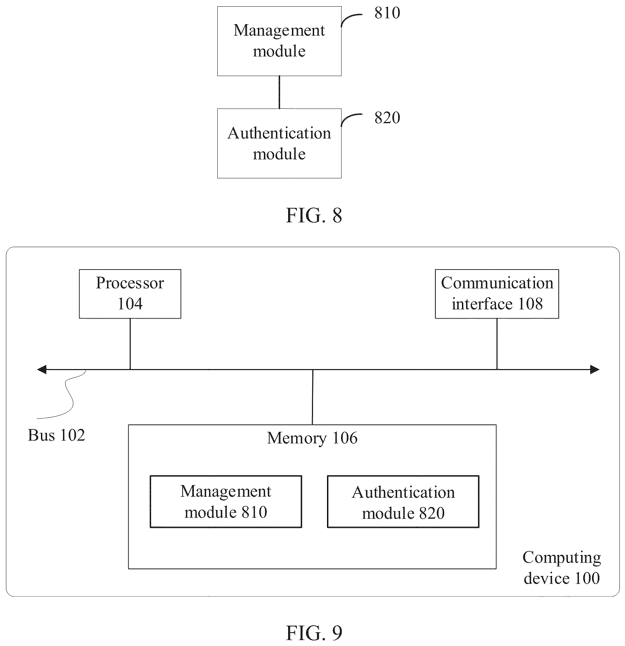

An embodiment of the present disclosure further provides a cloud computing technology based access management apparatus. The apparatus is used in a cloud platform. The cloud platform is configured to manage infrastructure that provides a cloud service. The infrastructure includes at least one cloud data center. Each of the at least one cloud data center includes a plurality of servers. The cloud service is deployed on one or more servers in the at least one cloud data center. As shown in FIG. 8, the apparatus includes a management module 810 and an authentication module 820.

The management module 810 is configured to: receive a data boundary establishment request that is input by a first tenant for the cloud service, where the data boundary establishment request is used to indicate the cloud platform to establish a data boundary for the cloud service, and the data boundary includes at least one of the following constraint conditions: information about an identity subject that uses the cloud service, access resource information related to the cloud service, network information related to use of the cloud service, information about a device that initiates an access request to the cloud service, and trusted execution environment information related to the cloud service; and establish a data boundary for the cloud service based on the data boundary establishment request.

The authentication module 820 is configured to: when the cloud service receives a first access request generated by a second tenant or the first tenant for the cloud service, compare information carried in the first access request with the constraint condition in the data boundary, and when the information carried in the first access request matches the constraint condition in the data boundary, allow the cloud service to respond to the first access request, or when the information carried in the first access request does not match the constraint condition in the data boundary, skip allowing the cloud service to respond to the first access request, where the information carried in the first access request includes one or any combination of the following: first identity subject information, first access resource information, first network information, first device information for initiating the first access request, and first trusted execution environment information.

In a possible implementation, the first tenant and the second tenant are registered with the cloud platform, a role of the first tenant is an administrator of the data boundary, and a role of the second tenant is a visitor of the data boundary.

In a possible implementation, the management module 810 is further configured to:
receive a constraint condition addition request that is input by the first tenant for the data boundary; and
add, to the data boundary, a first constraint condition indicated by the constraint condition addition request, where the first constraint condition is one or more of the following: second identity subject information, second access resource information, second network information, second device information for initiating an access request, and second trusted execution environment information.

In a possible implementation, the management module 810 is further configured to:
receive a constraint condition removal request that is input by the first tenant for the data boundary; and
remove, from the data boundary of the server, a second constraint condition indicated by the constraint condition removal request, where the first constraint condition is one or more of the following: third identity subject information, third access resource information, third network information, third device information for initiating an access request, and third trusted execution environment information.

In a possible implementation, the management module 810 is further configured to:
receive a data boundary deletion request that is input by the first tenant for the cloud service; and
delete the data boundary indicated by the data boundary deletion request.

In a possible implementation, the management module 810 is further configured to:
receive a data boundary function disabling request that is input by the first tenant for the cloud service; and
disable a data boundary function for the cloud service.

In a possible implementation, the management module 810 is further configured to:
receive a data boundary function enabling request that is input by the first tenant for the cloud service; and
enable a data boundary function for the cloud service.

Both the management module 810 and the authentication module 820 may be implemented by using software or hardware. For example, the following describes an implementation of the management module 810. Similarly, for an implementation of the authentication module 820, refer to the implementation of the management module 810.

For example, the module is a software functional unit, and the management module 810 may include code that is run on a computing instance. The computing instance may be at least one of the following computing devices: a physical host (computing device), a virtual machine, a container, and the like. Further, there may be one or more computing devices. For example, the management module 810 may include code that is run on a plurality of hosts, virtual machines, or containers. It should be noted that the plurality of hosts, virtual machines, or containers for running the code may be distributed in a same region or different regions. The plurality of hosts, virtual machines, or containers for running the code may be distributed in a same AZ or different AZs. Each AZ includes one data center or a plurality of data centers that are geographically close to each other. Usually, one region may include a plurality of AZs.

Similarly, the plurality of hosts, virtual machines, or containers for running the code may be distributed in a same VPC or a plurality of VPCs. Usually, one VPC is deployed in one region. A communication gateway needs to be deployed in each VPC for communication between two VPCs in a same region or between VPCs in different regions. The VPCs are interconnected through the communication gateway.

For example, the module is a hardware functional unit, and the management module 810 may include at least one computing device, for example, a server. Alternatively, the management module 810 may be a device implemented by using an ASIC or a PLD, or the like. The PLD may be implemented by using a CPLD, an FPGA, a GAL, or any combination thereof.

A plurality of computing devices included in the management module 810 may be distributed in a same region or different regions. The plurality of computing devices included in the management module 810 may be distributed in a same AZ or different AZs. Similarly, the plurality of computing devices included in the management module 410 may be distributed in a same VPC or a plurality of VPCs. The plurality of computing devices may be any combination of the following computing devices: a server, an ASIC, a PLD, a CPLD, an FPGA, a GAL, and the like.

The present disclosure further provides a computing device 100. As shown in FIG. 9, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in the present disclosure.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 9, but this does not mean that there is only one bus or only one type of bus. The bus 102 may include a path for transmitting information between the components (for example, the memory 106, the processor 104, and the communication interface 108) of the computing device 100.

The processor 104 may include any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 106 may include a volatile memory (volatile memory), for example, a random access memory (random access memory, RAM). The memory 106 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable code, and the processor 104 executes the executable code to separately implement the functions of the management module 810 and the authentication module 820, to implement the data access method. That is, the memory 106 stores instructions for performing the cloud computing technology-based access management method.

The communication interface 108 implements communication between the computing device 100 and another device or a communication network through a transceiver module, for example, but not limited to, a network interface card or a transceiver.

An embodiment of the present disclosure further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

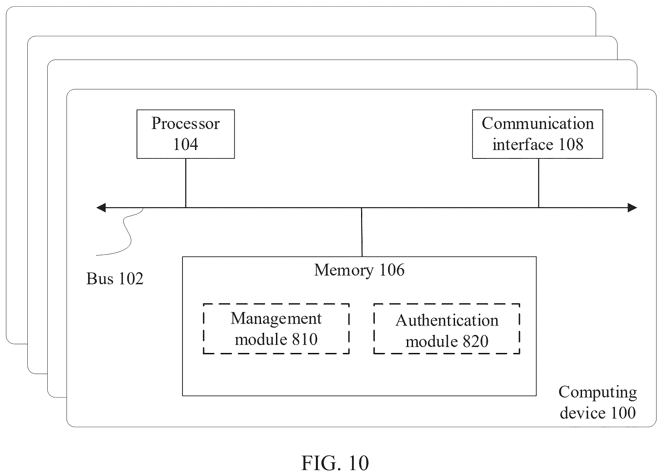

As shown in FIG. 10, the computing device cluster includes at least one computing device 100. A memory 106 in one or more computing devices 100 in the computing device cluster may store same instructions for performing the cloud computing technology based access management method.

In some possible implementations, a memory 106 in one or more computing devices 100 in the computing device cluster may alternatively respectively store some of instructions for performing the cloud computing technology-based access management method. In other words, a combination of one or more computing devices 100 may jointly execute instructions for performing the cloud computing technology-based access management method.

It should be noted that memories 106 in different computing devices 100 in the computing device cluster may store different instructions that are respectively used to perform some of functions of the cloud computing technology-based access management method.

In some possible implementations, a memory 106 in one or more computing devices 100 in the computing device cluster may alternatively respectively store some of instructions for performing the automated testing method. In other words, a combination of one or more computing devices 100 may jointly execute instructions for performing the cloud computing technology-based access management method.

It should be noted that memories 106 in different computing devices 100 in the computing device cluster may store different instructions for performing some of functions of the automated testing system. In other words, instructions stored in memories 106 in different computing devices 100 may implement functions of one or more nodes in the management module 810 and the authentication module 820.

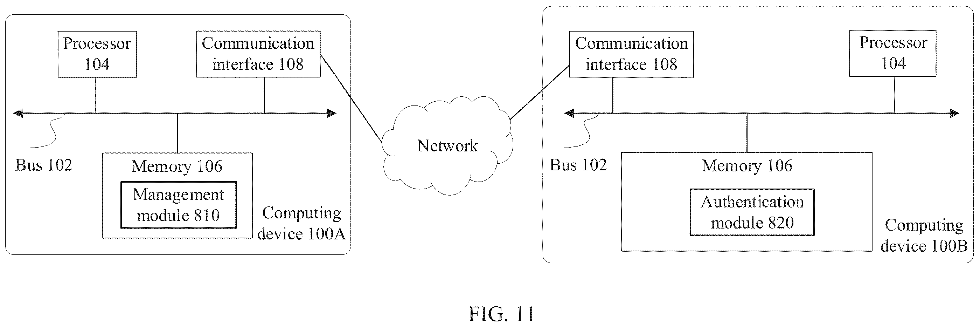

In some possible implementations, one or more computing devices in the computing device cluster may be connected through a network. The network may be a wide area network, a local area network, or the like. FIG. 11 shows a possible implementation. As shown in FIG. 11, two computing devices 100A and 100B are connected through a network. Specifically, each computing device is connected to the network through a communication interface of the computing device. In this possible implementation, a memory 106 in the computing device 100A stores instructions for performing the functions of the management module 810. In addition, a memory 106 in the computing device 100B stores instructions for performing the functions of the authentication module 820. It should be understood that functions of the computing device 100A shown in FIG. 11 may alternatively be performed by a plurality of computing devices 100. Similarly, functions of the computing device 100B may alternatively be performed by a plurality of computing devices 100.

An embodiment of the present disclosure further provides another computing device cluster. For a connection relationship between computing devices in the computing device cluster, refer to the connection manner in the computing device cluster in FIG. 10 and FIG. 11. A difference lies in that a memory 106 in one or more computing devices 100 in the computing device cluster may store same instructions for performing the cloud computing technology based access management method.

In some possible implementations, a memory 106 in one or more computing devices 100 in the computing device cluster may alternatively respectively store some of instructions for performing the automated testing method. In other words, a combination of one or more computing devices 100 may jointly execute instructions for performing the cloud computing technology-based access management method.

It should be noted that memories 106 in different computing devices 100 in the computing device cluster may store different instructions that are used to perform some of functions of the cloud computing technology-based access management apparatus. In other words, instructions stored in memories 106 in different computing devices 100 may implement functions of one or more nodes in the management module 810 and the authentication module 820.

An embodiment of the present disclosure further provides a computer program product including instructions. The computer program product may be software or a program product that includes instructions and that can be run on a computing device or stored in any usable medium. When the computer program product is run on at least one computing device, the at least one computing device is enabled to perform the cloud computing technology-based access management method.

An embodiment of the present disclosure further provides a computer-readable storage medium. The computer-readable storage medium may be any usable medium that can be stored on a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform the cloud computing technology-based access management method.

Finally, it should be noted that the foregoing embodiments are merely intended to describe the technical solutions of the present disclosure, but not to limit the present disclosure. Although the present disclosure is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present disclosure.

## Claims

1. A cloud computing technology based access management method, wherein the method is applied to a cloud platform, the cloud platform is configured to manage infrastructure that provides a cloud service, the infrastructure comprises at least one cloud data center, each of the at least one cloud data center comprises a plurality of servers, the cloud service is deployed on one or more servers in the at least one cloud data center, and the method comprises:
receiving, by the cloud platform, a data boundary establishment request that is input by a first tenant for the cloud service, wherein the data boundary establishment request is used to indicate the cloud platform to establish a data boundary for the cloud service, and the data boundary comprises at least one of the following constraint conditions: information about an identity subject that uses the cloud service, access resource information related to the cloud service, network information related to use of the cloud service, information about a device that initiates an access request to the cloud service, and trusted execution environment information related to the cloud service;
establishing, by the cloud platform, a data boundary for the cloud service based on the data boundary establishment request; and
when the cloud service receives a first access request generated by a second tenant or the first tenant for the cloud service, comparing, by the cloud platform, information carried in the first access request with the constraint condition in the data boundary, and when the information carried in the first access request matches the constraint condition in the data boundary, allowing the cloud service to respond to the first access request, or when the information carried in the first access request does not match the constraint condition in the data boundary, skipping allowing the cloud service to respond to the first access request, wherein the information carried in the first access request comprises one or more of the following: first identity subject information, first access resource information, first network information, first device information for initiating the first access request, and first trusted execution environment information.

2. The method according to claim 1, wherein the first tenant and the second tenant are registered with the cloud platform, a role of the first tenant is an administrator of the data boundary, and a role of the second tenant is a visitor of the data boundary.

3. The method according to claim 1 or 2, wherein the method further comprises:
receiving, by the cloud platform, a constraint condition addition request that is input by the first tenant for the data boundary; and
adding, by the cloud platform to the data boundary, a first constraint condition indicated by the constraint condition addition request, wherein the first constraint condition is one or more of the following: second identity subject information, second access resource information, second network information, second device information for initiating an access request, and second trusted execution environment information.

4. The method according to any one of claims 1 to 3, wherein the method further comprises:
receiving, by the cloud platform, a constraint condition removal request that is input by the first tenant for the data boundary; and
removing, by the cloud platform from the data boundary, a second constraint condition indicated by the constraint condition removal request, wherein the second constraint condition is one or more of the following: third identity subject information, third access resource information, third network information, third device information for initiating an access request, and third trusted execution environment information.

5. The method according to any one of claims 1 to 4, wherein the method further comprises:
receiving, by the cloud platform, a data boundary deletion request that is input by the first tenant for the cloud service; and
deleting, by the cloud platform, the data boundary indicated by the data boundary deletion request.

6. The method according to any one of claims 1 to 5, wherein the method further comprises:
receiving, by the cloud platform, a data boundary function disabling request that is input by the first tenant for the cloud service; and
disabling, by the cloud platform, a data boundary function for the cloud service.

7. The method according to claim 6, wherein the method further comprises:
receiving, by the cloud platform, a data boundary function enabling request that is input by the first tenant for the cloud service; and
enabling, by the cloud platform, a data boundary function for the cloud service.

8. A cloud computing technology-based access management apparatus, wherein the apparatus is used in a cloud platform, the cloud platform is configured to manage infrastructure that provides a cloud service, the infrastructure comprises at least one cloud data center, each of the at least one cloud data center comprises a plurality of servers, the cloud service is deployed on one or more servers in the at least one cloud data center, and the apparatus comprises:
a management module, configured to: receive a data boundary establishment request that is input by a first tenant for the cloud service, wherein the data boundary establishment request is used to indicate the cloud platform to establish a data boundary for the cloud service, and the data boundary comprises at least one of the following constraint conditions: information about an identity subject that uses the cloud service, access resource information related to the cloud service, network information related to use of the cloud service, information about a device that initiates an access request to the cloud service, and trusted execution environment information related to the cloud service; and establish a data boundary for the cloud service based on the data boundary establishment request; and
an authentication module, configured to: when the cloud service receives a first access request generated by a second tenant or the first tenant for the cloud service, compare information carried in the first access request with the constraint condition in the data boundary, and when the information carried in the first access request matches the constraint condition in the data boundary, allow the cloud service to respond to the first access request, or when the information carried in the first access request does not match the constraint condition in the data boundary, skip allowing the cloud service to respond to the first access request, wherein the information carried in the first access request comprises one or any combination of the following: first identity subject information, first access resource information, first network information, first device information for initiating the first access request, and first trusted execution environment information.

9. The apparatus according to claim 8, wherein the first tenant and the second tenant are registered with the cloud platform, a role of the first tenant is an administrator of the data boundary, and a role of the second tenant is a visitor of the data boundary.

10. The apparatus according to claim 8 or 9, wherein the management module is further configured to:
receive a constraint condition addition request that is input by the first tenant for the data boundary; and
add, to the data boundary, a first constraint condition indicated by the constraint condition addition request, wherein the first constraint condition is one or more of the following: second identity subject information, second access resource information, second network information, second device information for initiating an access request, and second trusted execution environment information.

11. The apparatus according to any one of claims 8 to 10, wherein the management module is further configured to:
receive a constraint condition removal request that is input by the first tenant for the data boundary; and
remove, from the data boundary of the cloud service, a second constraint condition indicated by the constraint condition removal request, wherein the second constraint condition is one or more of the following: third identity subject information, third access resource information, third network information, third device information for initiating an access request, and third trusted execution environment information.

12. The apparatus according to any one of claims 8 to 11, wherein the management module is further configured to:
receive a data boundary deletion request that is input by the first tenant for the cloud service; and
delete the data boundary indicated by the data boundary deletion request.

13. The apparatus according to any one of claims 8 to 12, wherein the management module is further configured to:
receive a data boundary function disabling request that is input by the first tenant for the cloud service; and
disable a data boundary function for the cloud service.

14. The apparatus according to claim 13, wherein the management module is further configured to:
receive a data boundary function enabling request that is input by the first tenant for the cloud service; and
enable a data boundary function for the cloud service.

15. A computer device cluster, wherein the computer device cluster comprises at least one computing device, and each computing device comprises a processor and a memory, wherein
a processor of the at least one computing device is configured to execute instructions stored in a memory of the device, to enable the computing device cluster to perform the cloud computing technology based access management method according to any one of claims 1 to 7.

16. A computer program product comprising instructions, wherein when the instructions are run by a computing device, the computing device is enabled to perform the cloud computing technology-based access management method according to any one of claims 1 to 7.

17. A computer-readable storage medium, comprising computer program instructions, wherein when the computer program instructions are executed by a computing device, the computing device performs the cloud computing technology based access management method according to any one of claims 1 to 7.
